# EUROPÄISCHE PATENTANMELDUNG

(11) **EP 0 884 540 A1**
(43) Veröffentlichungstag der Anmeldung: **16.12.1998**
(21) Anmeldenummer: 97810377.8
(22) Anmeldetag: 13.06.1997
(51) Int. Cl.: F24D 3/14

(54) **Haltevorrichtung für Rohre einer Fussbodenheizung und Verfahren zum Verlegen solcher Rohre**

(71) Anmelder: Handschin, Charles, 4705 Oensingen (CH)
(72) Erfinder: Handschin, Charles, 4705 Oensingen (CH)
(74) Vertreter: Roshardt, Werner Alfred, Dipl.-Phys.

(57) **Zusammenfassung**

Haltevorrichtung für Rohre (60, 70) von Fussbodenheizungen und Verfahren zum Verlegen solcher Rohre. Die Haltevorrichtung weist eine im allgemeinen flache Schiene (10) und ein ein Rohr (60, 70) mindestens oben umfassendes, an der Schiene (10) befestigbares Halterungselement (30) zur Fixierung des Rohres (60, 70) auf der Schiene (10) auf. Beim erfindungsgemässen Verfahren werden in einem ersten Schritt Schienen (10) auf dem Boden angeordnet, in einem zweiten Schritt Heizungsrohre (60, 70) nach einem vorgegebenen Verlegemuster auf den Schienen (10) angeordnet und in einem dritten Schritt die Rohre (60, 70) mittels Halterungselementen (30) auf den Schienen (10) fixiert. Die Haltevorrichtung und das Verfahren ermöglichen eine einfache, schnelle und präzise Montage von Heizungsrohren und vermindern die Gefahr von Rissbildungen im Estrich wesentlich.

## Beschreibung

### Stand der Technik

Beim Einbau einer Fussbodenheizung werden die Rohre beziehungsweise Schläuche der Fussbodenheizung nach vorgegebenem Verlegemuster entweder direkt auf dem Boden oder auf dem mit Isolationsmaterial und/oder Baufolien ausgekleideten Boden des zu beheizenden Raumes verlegt. Vor dem Einbringen des Estrichs oder Aufgiessen des Fliessestrichs müssen die Heizungsrohre gemäss dem Verlegemuster fixiert werden, um seitliche Verschiebungen und/oder ein Aufschwemmen der Rohre beim Einbringen des Estrichs zu verhindern.

Üblicherweise werden die Rohre mittels Klammern fixiert, die entweder durch Kleben oder häufiger durch Annageln auf dem Boden befestigt werden. Das Auslegen und Befestigen solcher einzelner Klammern nimmt jedoch viel Zeit in Anspruch und ist deshalb kostspielig.

Deshalb wird zur Vereinfachung der Montage von Bodenheizungen in CH 664 429 die Verwendung einer Halte- oder Montageschiene in Form eines U-Profils vorgeschlagen, die eine schmale, langgestreckte Bodenplatte und mindestens zwei von dieser etwa senkrecht und im Abstand voneinander vorstehende, sich über die Lange der Bodenplatte erstreckende Halteplatten mit in Abständen vorgesehenen Ausnehmungen zur Aufnahme der zu verlegenden Rohre umfasst. Mehrere derartige Montageschienen werden in Abständen voneinander und im allgemeinen parallel zueinander auf dem Boden ausgelegt. Anschliessend werden die Rohre im wesentlichen quer zu den Montageschienen angeordnet und in die Ausnehmungen eingedrückt, in denen Sie dann klemmend festgehalten werden.

Während die U-profilförmigen Montageschienen ein relativ einfaches Verlegen von Rohren für eine Fussbodenheizung ermöglichen, hat sich herausgestellt, dass die senkrechten Halteplatten der U-Profile eine Schwächung des die Rohre und U-Profile umgebenden Estrichs zur Folge haben. Die Halteplatten der U-Profile zum Befestigen der Heizungsrohre haben die gleiche Wirkung wie eine Fuge von unten. Der aus dem Estrich gebildete Unterlagsboden ist somit geschwächt, was schon bei leichten Spannungen zu Rissbildungen führen kann, wobei der Rissverlauf über den als Montageschienen verlegten U-Profilen liegt. Wenn auf dem Unterlagsboden z.B. Keramikbodenplatten angebracht sind, so reissen auch diese, was kostspielige Reparaturen zur Folge hat.

### Darstellung der Erfindung

Aufgabe der vorliegenden Erfindung ist die Bereitstellung einer Haltevorrichtung für Rohre einer Fussbodenheizung und eines Verfahren zum Verlegen solcher Rohre, durch welche die Nachteile der bekannten Vorrichtungen und Verfahren überwunden werden.

Die Lösung der Aufgabe ist Gegenstand der Patentansprüche 1 und 10.

Die erfindungsgemässe Haltevorrichtung für Rohre von Fussbodenheizungen weist auf dem Boden des zu beheizenden Raumes auslegbare Schienen auf und die Heizungsrohre mindestens oben umfassende, an der Schiene befestigbare Halterungselemente zur Fixierung der Heizungsrohre auf der Schiene. Vorzugsweise hat die erfindungsgemässe Schiene im wesentlichen die Form einer flachen, schmalen, langgestreckten Platte.

Vorzugsweise sind an den Schienen als Montagehilfe zum Anordnen der Heizungsrohre auf den Schienen Markierungen angebracht, um das Anordnen der Heizungsrohre gemäss einem vorgegebenen Verlegemuster zu erleichtern. Die Markierungen können z.B. aus Bohrungen in den Schienen bestehen, die in einem Rapport von 5 cm angeordnet sind.

Bei einer bevorzugten Ausführungsform der Erfindung ist das Halterungselement bügelförmig ausgebildet, so dass es das Rohr oben und auf beiden Seiten umfasst. Vorzugsweise weist das bügelförmige Halterungselement an beiden Bügelenden je eine Vorrichtung zur Befestigung des Halterungselements an der Schiene auf. Das Halterungselement kann jedoch auch in Form einer einseitig offenen Klammer ausgebildet sein und nur eine Vorrichtung zur Befestigung des Haltetungselements an der Schiene aufweisen.

Bei der besonders bevorzugten Ausführungsform der Erfindung wird die Verbindung zwischen Schiene und Halterungselement durch eine Ausnehmung in der Oberseite der Schiene und einen an der Unterseite des Halterungselements vorgesehenen, in die Ausnehmung einsteckbaren und dort festklemmbaren Vorsprung verwirklicht. Vorzugsweise hat die Ausnehmung im Querschnitt im wesentlichen die Form eines auf dem Kopf stehenden T und das Halterungselement im wesentlichen die der Ausnehmung in der Schiene komplementäre Querschnittform eines auf dem Kopf stehenden T.

Die Ausnehmung ist vorzugsweise als in Längsrichtung der Schiene durchgehende Nut ausgebildet. Es können jedoch auch mehrere einzelne, im Rapport angeordnete Ausnehmungen vorgesehen sein.

Anstelle Steckverbindung mit Ausnehmung in der Schiene und Vorsprung am Halterungselement können auch andere Verbindungstypen für die Befestigung des Halterungselements an der Schiene verwendet werden, wie z.B. druckknopfähnliche Verbindungen.

Die bevorzugte erfindungsgemässe Haltevorrichtung ist mit einer sich selbständig an unterschiedliche Rohrdurchmesser anpassenden Einrichtung zum Halten des Rohres ausgerüstet. Vorzugsweise besteht diese Einrichtung aus nachgiebigen Lamellen, die an der zum Rohr gerichteten Innenseite des Halterungselements angebracht sind und das Rohr mit einer elastischen Kraft festhalten. Zur Erhöhung der Anpassungsfähigkeit an unterschiedliche Rohrdurchmesser können die Lamellen gelenkig an der Innenseite des Halterungselements angebracht sein. Anstelle von Lamellen können andere flexible Festhalteelemente, wie z.B. radial nach innen gerichtete Borsten, sägezahnartige Lappen aus flexiblen Materialien, kompressible Gummi- oder Kunsstoffpuffer etc. zur selbständigen Anpassung an unterschiedliche Rohrdurchmesser verwendet werden.

Beim erfindungsgemässen Verfahren zum Verlegen von Rohren für eine Fussbodenheizung werden in einem ersten Schritt Schienen auf dem Boden eines zu beheizenden Raumes angeordnet. In einem zweiten Schritt werden die Rohre nach einem vorgegebenen Verlegemuster auf den Schienen angeordnet. Danach werden die Heizungsrohre in einem dritten Schritt mittels Halterungselementen auf den Schienen fixiert.

Da die Heizungsrohre bei der erfindungsgemässen Haltevorrichtung mittels Halterungselementen auf der Schiene fixierbar sind, sind die bei Halteschienen der in CH 664 429 beschriebenen Art notwendigerweise vorhandenen senkrechten Halteplatten zur Aufnahme der Rohre bei der erfindungsgemässen Haltevorrichtung nicht mehr nötig. Dadurch weist die erfindungsgemässe Schiene gegenüber herkömmlichen U-Profilschienen nebst der geringeren Rissbildung im Estrich weitere wesentliche Vorteile auf, weil der Platzbedarf zur Lagerung und zum Transport der Schienen und das Gewicht pro Laufmeter der Schienen bei der erfindungsgemässen Haltevorrichtung wesentlich vermindert sind. Die kleinere Bauhöhe im Vergleich zu herkömmlichen Schienen lässt auch eine Einsparung an Aufbauhöhe des Fliessestrichs zu, wodurch Baukosten gespart werden. Durch die kleinere Aufbauhöhe des Fliessestrichs wird zudem die als Nachteil empfundene bekannte Trägheit von Fussbodenheizungen wesentlich vermindert.

Die nachfolgende detaillierte Beschreibung eines Ausführungsbeispiels der vorliegenden Erfindung dient in Verbindung mit den beiliegenden Zeichnungen nur als Beispiel für ein besseres Verständnis der Erfindung und ist nicht als Einschränkung des Schutzbereichs der vorliegenden Erfindung, wie sie in den Patentansprüchen definiert wird, aufzufassen. Für den Fachmann sind aus der nachfolgenden Beschreibung in Verbindung mit den beiliegenden Zeichnungen und der Gesamtheit der Patentansprüche weitere vorteilhafte Ausführungsformen und Merkmalskombinationen ohne weiteres erkennbar, die jedoch immer noch innerhalb des Bereichs der vorliegenden Erfindung liegen.

### Kurze Beschreibung der Zeichnungen

Die Zeichnungen stellen eine bevorzugte Ausführungsform der vorliegenden Erfindung dar. Es zeigt:
- Fig. 1: eine Haltevorrichtung gemäss der vorliegenden Erfindung in einer Stirnansicht;
- Fig. 2: ein Halterungselement gemäss der vorliegenden Erfindung in einer vereinfachten Querschnittansicht;
- Fig. 3: das Halterungselement aus Fig. 2 in einer Stirnansicht.

Grundsätzlich sind in den Figuren gleiche Teile mit gleichen Bezugszeichen versehen.

### Wege zur Ausführung der Erfindung

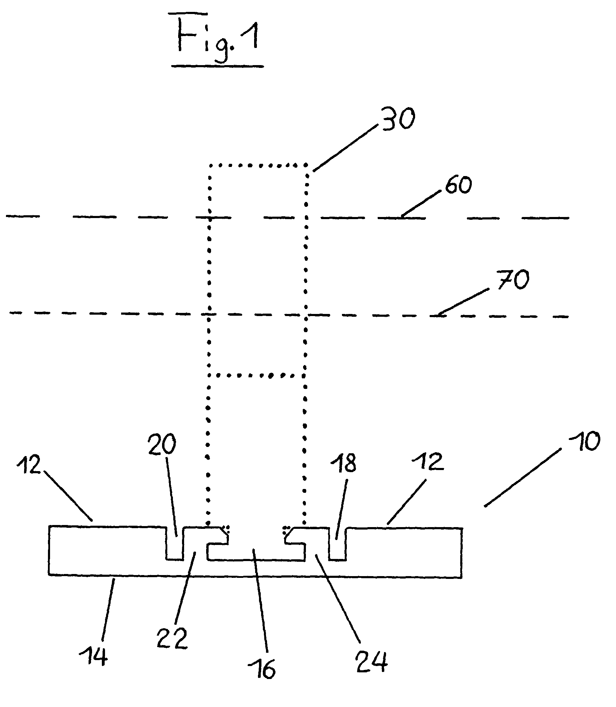

Figur 1 stellt in einer Stirnansicht in durchgezogenen Linien die Schiene 10 gemäss einer besonders bevorzugten Ausführungsform der vorliegenden Erfindung dar. In punktierten Linien ist das an der Schiene 10 befestigte Halterungselement 30 dargestellt, und in durchgezogenen Linien sind die oberen Scheitellinien von Heizungsrohren dargestellt, wobei das mit 70 bezeichnete Scheitelrohr als Beispiel für ein Rohr mit kleinem Durchmesser dient und das mit 60 bezeichnete Scheitelrohr als Beispiel für ein Rohr mit grossem Durchmesser. Um die Zeichnung nicht unnötig zu belasten, wurde die untere Begrenzung der Rohre (60, 70) nicht gezeichnet: sie verläuft parallel zu den Scheitellinien (60, 70) auf Höhe der Oberseite 12 der Schiene 10, da die Rohre (60, 70) auf der Schiene aufliegen.

Die Schiene 10 ist im wesentlichen flach und weist insbesondere keine senkrechten Halteplatten zur Aufnahme der Rohre auf, wie sie bei den bisher bekannten Montageschienen der in CH 664 429 beschriebenen Art notwendigerweise vorhandenen sind. Somit hat die Schiene 10 im wesentlichen die Form einer flachen, schmalen, langgestreckten Platte.

Die Unterseite 14 der Schiene 10 kann zur Befestigung der Schiene 10 am Boden mit einem doppelseitigen Klebeband versehen sein, wie es bereits bei den bekannten Montageschienen üblich ist. Die Schiene 10 kann, wie es ebenfalls bei den bekannten Montageschienen üblich ist, zusätzlich mit Sollbruchstellen, z.B. in Form von im Rapport von 5 cm angeordneten Aussparungen quer über die Schiene, und/oder mit Bohrungen zur Befestigung der Schiene auf dem Boden versehen sein. Bei der bevorzugten Ausführungsform der Erfindung sind als Montagehilfe zum Anordnen der Heizungsrohre 60, 70 auf den Schienen 10 Markierungen an den Schienen 10 angebracht, um das Anordnen der Heizungsrohre 60, 70 gemäss einem vorgegebenen Verlegemuster zu erleichtern. Die Markierungen können z.B. aus in regelmässigem Abstand angeordneten Bohrungen in den Schienen 10 bestehen.

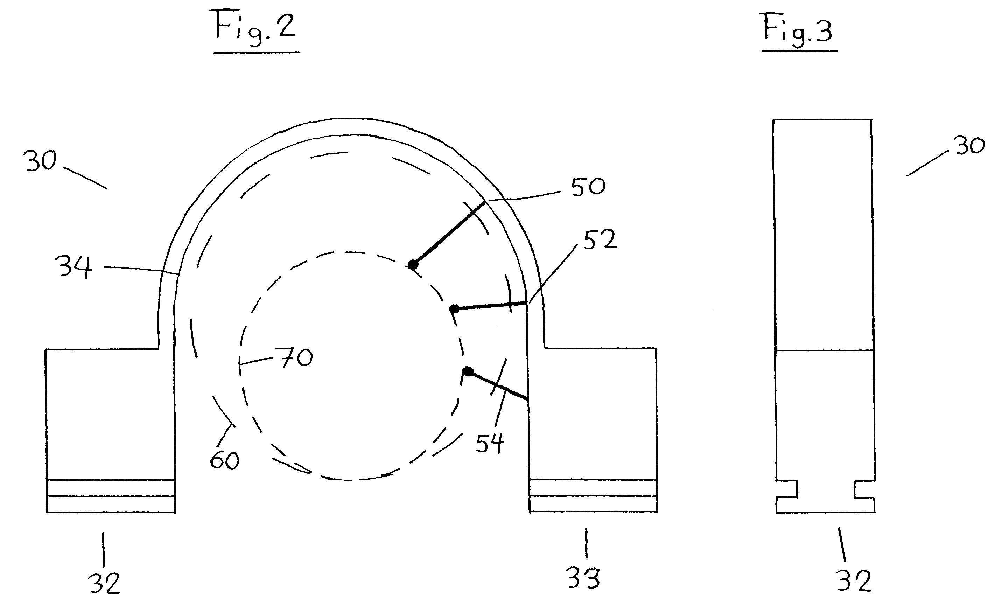

Das Halterungselement 30 für die Heizungsrohre 60, 70 gemäss der bevorzugten Ausführungsform der Erfindung ist in den Figuren 2 und 3 dargestellt. Das Halterungselement 30 hat im wesentlichen die Form eines Bügels mit zwei Enden, so dass es das Rohr 60, 70 oben und auf beiden Seiten umfasst; mit seinem unteren Scheitelpunkt liegt das Rohr 60, 70 auf der Schiene 10 auf. Die Bügelenden haben bei der in den Figuren dargestellten Ausführungsform der Erfindung die Form von massiven, quaderförmigen Blöcken. Bei anderen Ausführungsformen können sie zwecks Materialersparnis aus hohlen Blöcken bestehen und/oder schlankeren Formen aufweisen.

Entlang der Längsrichtung der Schiene 10 ist in ihrer Oberseite 12 eine Ausnehmung 16 in Form einer durchgehenden Nut ausgebildet, die in der Querschnittansicht die Form eines auf dem Kopf stehenden T hat. Bei der dargestellten Ausführungsform ist in einem Abstand seitlich der beiden Seitenränder der Nut 16 je eine weitere, parallel zur Nut 16 verlaufende Nut 18, 20 ausgebildet, wodurch die Ausnehmung 16 seitlich je durch einen winkelförmigen Balken 22, 24 berandet ist. Die Oberseiten der Balken 22, 24 sind gegen die Ausnehmung 16 hin abgeschrägt.

An den Unterseiten der beiden Bügelenden weist das Halterungselement 30 je einen Vorsprung 32, 33 auf, der in der Seitenansicht der Figur 3 die Form eines auf dem Kopf stehenden T hat, wobei der Vorsprung 32, 33 bei an der Schiene 10 befestigtem Halterungselement 30 mit einer entsprechenden Nut 16 auf der Oberseite 12 der Schiene zusammenwirkt. Der T-förmige Vorsprung 32, 33 des Haltetungselements 30 hat im Querschnitt im wesentlichen die komplementäre Form der T-förmigen Ausnehmung 16 auf der Oberseite 12 der Schiene 10.

Zur Befestigung des Halterungselements 30 an der Schiene 10 wird das Halterungselement von oben über der Ausnehmung 16 gegen die Oberseite 12 der Schiene 10 gedrückt. Sobald der T-förmige Vorsprung 32, 33 gegen die abgeschrägten Oberseiten der Balken 22, 24 drückt, weichen die Balken 22, 24 zur Seite aus, der T-förmige Vorsprung 32, 33 gleitet nach unten in die Ausnehmung 16 hinein und durch das Einschnappen der winkelförmigen Balken 22, 24 über den beiden Seitenästen des T-förmigen Vorsprungs 32, 33 wird der T-förmige Vorsprung 32, 33 in der Ausnehmung 16 festgeklemmt und dadurch das Halterungselement 30 an der Schiene 10 befestigt. Die Klemmkraft, mit der die Balken 22, 24 den T-förmigen Vorsprung 32, 33 in der Schiene 10 festhalten, kann bei der Herstellung der Schiene festgelegt werden, indem die parallel zur Nut 16 verlaufenden Nuten 18, 20 mehr oder weniger tief ausgebildet werden: tiefe Nuten 18, 20 bewirken eine kleine Klemmkraft, wenig tiefe Nuten 18, 20 haben eine grosse Klemmkraft zur Folge.

Die in den Figuren 2 und 3 dargestellte bevorzugte Ausführungsform des erfindungsgemässen Halterungselements 30 ist mit einer sich selbständig an unterschiedliche Rohrdurchmesser anpassenden Einrichtung 50, 52, 54 zum Halten des Rohres ausgerüstet. Vorzugsweise besteht diese Einrichtung aus nachgiebigen Lamellen 50, 52, 54. In der Figur 2 sind der Einfachheit halber nur 3 Lamellen 50, 52, 54 stellvertretend für die in Wirklichkeit viel grössere Anzahl von Lamellen dargestellt. Die Lamellen 50, 52, 54 sind an der zum Rohr 60, 70 gerichteten Innenseite 34 des Halterungselements 30 angebracht und halten das Rohr 60, 70 mit einer elastischen Kraft fest. In Figur 2 sind schematisch mit unterbrochenen Linien ein Heizungsrohr 60 mit grossem Durchmesser und ein Heizungsrohr 70 mit kleinem Durchmesser dargestellt, wobei die in Figur 2 dargestellten Lamellen 50, 52, 54 im das Heizungsrohr 70 mit kleinem Durchmesser festhaltenden Zustand dargestellt sind. Bei einem kleinen Rohrdurchmesser verlaufen die Lamellen 50, 52, 54 nahezu radial von der Innenseite 34 des Halterungselements 30 zur Rohraussenseite, bei einem grösseren Rohrdurchmesser sind die Lamellen stärker aus ihrer radialen Ruhelage weggebogen. Typische Durchmesser von Rohren für Fussbodenheizungen liegen im Bereich zwischen 5 und 50 mm.

Beim erfindungsgemässen Verfahren zum Verlegen von Rohren 60, 70 für eine Fussbodenheizung werden in einem ersten Schritt Schienen 10 auf dem Boden eines zu beheizenden Raumes angeordnet. Die Schienen 10 können z.B. mittels eines doppelseitigen Klebstreifens auf dem Boden befestigt werden. Danach werden in einem zweiten Schritt die Rohre 60, 70 nach einem vorgegebenen Verlegemuster auf den Schienen angeordnet. In einem dritten Schritt werden die Heizungsrohre 60, 70 mittels Halterungselementen 30, die einerseits zum Halten der Rohre 60, 70 ausgebildet sind und andrerseits an den Schienen 10 befestigbar sind, auf den Schienen 10 fixiert, indem die Halterungselemente 30 um die Rohre 60, 70 angeordnet und mitsamt diesen an den Schienen 10 befestigt werden.

Da die Heizungsrohre 60, 70 bei der erfindungsgemässen Haltevorrichtung mittels Halterungselementen 30 auf der Schiene fixierbar sind, sind die bei Halteschienen der in CH 664 429 beschriebenen Art notwendigerweise vorhandenen senkrechten Halteplatten zur Aufnahme der Rohre bei der erfindungsgemässen Haltevorrichtung nicht mehr nötig. Dadurch weist die erfindungsgemässe Schiene 10 gegenüber herkömmlichen U-Profilschienen nebst der geringeren Rissbildung im Estrich weitere wesentliche Vorteile auf, so z.B. weil der Platzbedarf zur Lagerung und zum Transport der Schienen und das Gewicht pro Laufmeter der Schienen 10 bei der erfindungsgemässen Haltevorrichtung wesentlich vermindert sind. Die kleinere Bauhöhe im Vergleich zu herkömmlichen Schienen lässt auch eine Einsparung an Aufbauhöhe des Fliessestrichs zu, wodurch Baukosten eingespart werden. Durch die kleinere Aufbauhöhe des Fliessestrichs wird zudem die als Nachteil empfundene bekannte Trägheit von Fussbodenheizungen wesentlich vermindert.

Die erfindungsgemässen Halterungselemente 30 sind geeignet, um mittels eines geeigneten Dispensers durch einen Heizungsmonteur in stehender Haltung um das Heizungsrohr angeordnet und an der Schiene 10 befestigt zu werden. Dadurch lässt sich ein mühsames Bücken zum Montieren vermeiden und die Bodenheizungsrohre 60, 70 können unter Verwendung der erfindungsgemässen Haltevorrichtung einfach und schnell und somit kostengünstig verlegt werden.

Anstelle der Ausbildung der Ausnehmung 16 in Form einer durchgehenden Nut in der Oberseite der Schiene 10 können bei einer alternativen Ausführungsform der Erfindung auch mehrere einzelne, im Rapport angeordnete Ausnehmungen vorgesehen sein, in welche der Vorsprung des Halterungselements 30 einsteckbar ist.

Bei einer alternativen Form des Halterungselements 30 gemäss der Erfindung sind die beiden Seitenäste des T-förmigen Vorsprungs 32, 33 auf ihrer Unterseite an den seitlichen Rändern abgeschrägt (analog den in Figur 1 dargestellten abgeschrägten Oberseiten der Balken 22, 24), um das Einführen des Vorsprungs 32, 33 in die Ausnehmung 16 zu erleichtern.

Die Steckverbindung mit Ausnehmung 16 in der Schiene 10 und Vorsprung 32, 33 am Halterungselement 30 kann bei weiteren Ausführungsformen der Erfindung durch andere Verbindungstypen für die Befestigung des Halterungselements an der Schiene ersetst sein, wie z.B. durch druckknopfähnliche Verbindungen. Bei einer weiteren Variante der Erfindung kann das Halterungselement zur Fixierung des Rohres auf der Schiene aus Draht, Schnur oder aus einem Flachband bestehen, mit welchem das Rohr auf der Schiene festgebunden wird, wobei an der Schiene entsprechende Anbringungsvorrichtungen in Form von Bohrungen, Ausnehmungen, Vorsprüngen oder Noppen vorzusehen sind.

Bei einer weiteren Variante der Erfindung ist das Halterungselement in Form einer einseitig offenen Klammer ausgebildet und weist nur eine einzige Vorrichtung zur Befestigung des Halterungselements an der Schiene auf. Die Klammer umfasst das Rohr auf einer Seite bis zum Scheitelpunkt des Rohres und noch etwas darüber hinaus, die andere Seite des Rohres bleibt im wesentlichen frei.

Anstelle von Lamellen 50, 52, 54 können auch Borsten oder andere flexible Festhalteelemente verwendet werden, um eine sich selbständig an unterschiedliche Rohrdurchmesser anpassende Einrichtung zum Halten des Rohres zu bilden.

Die Schiene 10 und das Halterungselement 30 können aus Kunststoff-Recyclat, Kunststoff, Metall oder aus einem anderen geeigneten Material bestehen.

Zusammenfassend ist festzustellen, dass durch die Erfindung eine Haltevorrichtung für Rohre von Fussbodenheizungen und ein Verfahren zum Verlegen solcher Rohre bereit gestellt wird, die eine einfache, schnelle und präzise Montage von Heizungsrohren ermöglichen und die Gefahr von Rissbildungen im Estrich wesentlich vermindern.

## Patentansprüche

1. Haltevorrichtung für Rohre von Fussbodenheizungen mit einer Schiene (10), gekennzeichnet durch ein ein Rohr (60, 70) mindestens oben umfassendes, an der Schiene (10) befestigbares Halterungselement (30) zur Fixierung des Rohres (60, 70) auf der Schiene (10).

2. Haltevorrichtung nach Anspruch 1, dadurch gekennzeichnet, dass die Schiene (10) im wesentlichen aus einer flachen, schmalen, langgestreckten Platte besteht.

3. Haltevorrichtung nach Anspruch 1 oder 2, dadurch gekennzeichnet, dass das Halterungselement (30) bügelförmig, das Rohr (60, 70) oben und auf beiden Seiten umfassend, ausgebildet ist und an mindestens einem der beiden Bügelenden je eine Vorrichtung (32, 33) zur Befestigung des Halterungselements (30) an der Schiene (10) aufweist.

4. Haltevorrichtung nach einem der Ansprüche 1 oder 2, dadurch gekennzeichnet, dass das Halterungselement in Form einer einseitig offenen Klammer ausgebildet ist und eine Vorrichtung zur Befestigung des Haltetungselements an der Schiene aufweist.

5. Haltevorrichtung nach einem der Ansprüche 1 bis 4, dadurch gekennzeichnet, dass die Schiene (10) auf ihrer Oberseite (12) mit einer Ausnehmung (16) versehen ist, die im Querschnitt im wesentlichen die Form eines auf dem Kopf stehenden T hat, und das Halterungselement (30) zu seiner Befestigung an der Schiene (10) an seiner Unterseite mindestens einen in die Ausnehmung einsteckbaren und sich darin verklemmenden Vorsprung (32, 33) aufweist.

6. Haltevorrichtung nach Anspruch 5, dadurch gekennzeichnet, dass der Vorsprung (32, 33) des Halterungselements (30) im Querschnitt im wesentlichen die der Ausnehmung (16) in der Schiene (10) komplementäre Form eines auf dem Kopf stehenden T hat.

7. Haltevorrichtung nach einem der Ansprüche 1 bis 6, dadurch gekennzeichnet, dass das Halterungselement (30) mit einer sich selbständig an unterschiedliche Rohrdurchmesser anpassenden Einrichtung (50, 52, 54) zum Halten des Rohres (60, 70) ausgerüstet ist.

8. Haltevorrichtung nach Anspruch 7, dadurch gekennzeichnet, dass die Einrichtung (50, 52, 54) zum Halten des Rohres (60, 70) aus nachgiebigen Lamellen (50, 52, 54) an der zum Rohr (60, 70) gerichteten Innenseite (34) des Halterungselements (30) besteht, die das Rohr (60, 70) mit einer elastischen Kraft festhalten.

9. Haltevorrichtung nach einem der Ansprüche 1 bis 8, dadurch gekennzeichnet, dass die Schiene (10) Befestigungsmittel sowie Markierungen aufweist, wobei die Schiene in einem ersten Schritt in der gewünschten Anordnung mit Hilfe der Befestigungsmittel auf dem Boden zu befestigen ist und die Rohre (60, 70) in einem zweiten Schritt gemäss den Markierungen zu verlegen und in einem dritten Schritt auf der Schiene zu fixieren sind.

10. Verfahren zum Verlegen von Rohren (60, 70) für eine Fussbodenheizung, bei dem in einem ersten Schritt Schienen (10) auf dem Boden eines zu beheizenden Raumes angeordnet werden, in einem zweiten Schritt die Rohre (60, 70) nach einem vorgegebenen Verlegemuster auf den Schienen (10) angeordnet werden, gekennzeichnet durch einen dritten Schritt, in dem die Rohre (60, 70) mittels Halterungselementen (30) auf den Schienen (10) fixiert werden.
